Europäisches Patentamt

European Patent Office

Office européen des brevets

(11) Numéro de publication: **0 246 976 B1**

# FASCICULE DE BREVET EUROPEEN

(45) Date de publication de fascicule du brevet:
**15.01.92**

(51) Int. Cl.5: **H02J 7/14**

(21) Numéro de dépôt: **87401146.3**

(22) Date de dépôt: **21.05.87**

(54) **Dispositif d'alimentation électrique des circuits auxiliaires d'une automobile en régime temporaire de surtension.**

(30) Priorité: **23.05.86 FR 8607403**
**16.10.86 FR 8614368**

(43) Date de publication de la demande:
**25.11.87 Bulletin 87/48**

(45) Mention de la délivrance du brevet:
**15.01.92 Bulletin 92/03**

(84) Etats contractants désignés:
**DE ES GB IT SE**

(56) Documents cités:
**WO-A-84/03595**
**GB-A- 1 483 033**
**US-A- 3 469 073**
**US-A- 3 668 514**

**PATENT ABSTRACTS OF JAPAN, vol. 7, no. 40 (E-159)[1185], 17 février 1983; & JP-A-57 193 999 (SHINKO DENKI K.K.) 29-11-1982**

(73) Titulaire: **VALEO EOUIPEMENTS ELECTRI-OUES MOTEUR**
**2, Rue André Boulle**
**F-94000 Creteil(FR)**

(72) Inventeur: **Meuret, Jean-Pierre**
**13, rue Paul Verlaine**
**F-93130 Noisy-le-Sec(FR)**
Inventeur: **Ducrot, Christian**
**4, rue du Clos Saint-Denis**
**F-94000 Creteil(FR)**
Inventeur: **Vogelsberger, Marcel**
**3, place Leamington**
**F-92330 Sceaux(FR)**

(74) Mandataire: **Martin, Jean-Jacques et al**
**Cabinet REGIMBEAU 26, Avenue Kléber**
**F-75116 Paris(FR)**

## Description

L'invention est relative à un dispositif d'alimentation électrique en régime temporaire des circuits auxiliaires d'un véhicule automobile en surtension.

Les circuits électriques d'un véhicule automobile sont habituellement alimentés par une batterie d'accumulateurs chargée par un alternateur dont le courant d'excitation est régulé par un régulateur. Il est le plus souvent avantageux de subdiviser en fait les circuits électriques du véhicule en un circuit principal 1 et des circuits auxiliaires 2, le circuit principal comprenant des circuits d'allumage, de charge de batterie, de chauffage, de ventilation et d'éclairage alimentés sous 14 volts sensiblement, et les circuits auxiliaires comportant un réseau de chauffage électrique rapide destiné au pare-brise, la lunette arrière, les sièges et des dispositifs infrarouge alimentés sous tension plus élevée, en fonction de la rapidité recherchée. L'alimentation en surtension des circuits précités présente bien entendu un caractère temporaire qui dépendra soit d'une temporisation tributaire de la température extérieure, soit de la température du circuit de refroidissement du véhicule, soit de l'action même du conducteur.

Actuellement, les solutions proposées pour assurer cette alimentation consistent soit à réaliser un deuxième bobinage stator de l'alternateur avec un nombre de spires approprié pour fournir la surtension souhaitée, soit, à partir de la tension alternative à 14 volts délivrée par l'alternateur, à utiliser un transformateur élévateur de tension pour alimenter les circuits auxiliaires.

Les solutions précitées présentent respectivement les inconvénients de l'utilisation d'un équipement supplémentaire, transformateur, qui en fait, ne fonctionne que très peu de temps, essentiellement lors du démarrage du véhicule, celui-ci et le moteur étant encore a température ambiante, et de la réduction de la puissance nominale de l'alternateur en fonctionnement normal du fait de la présence du bobinage auxiliaire.

Plus récemment, dans le document US 3 469 073 a été décrit un dispositif d'alimentation électrique en régime temporaire en surtension d'une charge auxiliaire, conformément au préambule de la revendication 1.

Toutefois, pour ce dispositif, la connexion-déconnexion de la charge auxiliaire de la sortie alternateur non redressée, est effectuée par un commutateur thermique, seule la sortie alternateur non redressée étant connectée à la charge auxiliaire par un relais.

La présente invention a pour but de remédier aux inconvénients précités par la mise en oeuvre d'un dispositif d'alimentation électrique en surtension des circuits d'un véhicule automobile, dans lequel tout équipement supplémentaire au niveau de l'alternateur est supprimé.

Un autre objet de la présente invention est la mise en oeuvre d'un dispositif d'alimentation en énergie électrique d'un véhicule automobile, dans lequel l'alternateur, bien que fonctionnant en régime de surtension, fonctionne toujours à une puissance au moins égale à sa puissance nominale.

Un autre objet de la présente invention est en outre un dispositif d'alimentation en énergie électrique d'un véhicule automobile, dans lequel les pertes cuivre de l'alternateur, pertes par effet Joule, sont réduites bien que l'alternateur fonctionne en régime de surtension.

Le dispositif d'alimentation électrique en régime temporaire des circuits auxiliaires d'un véhicule automobile objet de l'invention, le véhicule comportant un circuit principal comprenant une charge d'utilisation principale alimentée par une batterie d'accumulateurs chargée par un alternateur dont le courant d'excitation est régulé par un régulateur, ledit dispositif d'alimentation comportant en outre des moyens de commutation commandée de la sortie stator dudit alternateur sur la charge auxiliaire, l'excitation dudit alternateur, suite à cette commutation, étant amenée par l'intermédiaire dudit régulateur à une valeur suffisante, en fonction du régime du moteur, pour assurer une alimentation en régime temporaire des circuits auxiliaires en surtension et sous intensité réduite est remarquable en ce que lesdits moyens de commutation sont constitués par un relais commandé par un interrupteur, ledit relais assurant, d'une part, en position normalement fermée la liaison de la sortie stator dudit alternateur à la charge d'utilisation principale et à la batterie et, d'autre part, en position commandée, la liaison de la sortie stator dudit alternateur à ladite charge auxiliaire ainsi que la liaison de la sortie stator dudit alternateur à une entrée de commande d'excitation du régulateur, la tension de sortie de l'alternateur continuant d'être régulée par le régulateur quand la charge auxiliaire est alimentée, et la présence de tension sur la charge auxiliaire étant détectée afin de modifier la consigne du régulateur.

Selon un autre mode de mise en oeuvre de l'invention, un dispositif d'alimentation électrique en régime temporaire des circuits auxiliaires d'un véhicule automobile dont le circuit principal comprend une charge d'utilisation principale alimentée par une batterie d'accumulateurs chargée par un alternateur dont le courant d'excitation est régulé par un régulateur, ledit dispositif d'alimentation comportant en outre des moyens de commutation commandée de la sortie stator dudit alternateur sur la charge auxiliaire, l'excitation dudit alternateur, suite à cette commutation, étant amenée par l'intermédiaire dudit régulateur à une valeur suffisante, en fonction du régime du moteur, pour assurer une alimentation, en régime temporaire, desdits circuits auxiliaires en surtension et sous intensité réduite, est remarquable en ce que les moyens de commutation commandée de la sortie stator de l'alternateur sur la charge auxiliaire comportent des thyristors montés dans le demi-pont redresseur positif de l'alternateur, chacun desdits thyristors étant commandé par un transistor de commande dont l'électrode de collecteur est reliée à l'électrode de déclenchement du thyristor correspondant et dont l'électrode d'émetteur est reliée par l'intermédiaire d'au moins une diode à la borne d'entrée alternateur du pont redresseur, l'électrode de base desdits transistors étant reliée en parallèle par l'intermédiaire d'une diode Zener à un interrupteur de commande d'alimentation de la charge auxiliaire, et en ce que l'entrée du régulateur est connectée à l'interrupteur de commande d'alimentation de charge auxiliaire par l'intermédiaire d'un transistor dont l'électrode d'émetteur est directement reliée à la borne du demi-pont redresseur et dont l'électrode de collecteur est directement connectée à l'entrée du régulateur, l'électrode de base du transistor étant reliée à l'interrupteur de commande de charge auxiliaire par l'intermédiaire d'une diode et d'un circuit de polarisation, et l'électrode de collecteur du transistor et l'entrée du régulateur étant connectées à la sortie du demi-pont redresseur alimentant la charge auxiliaire par l'intermédiaire d'une résistance de polarisation, la tension de sortie de l'alternateur continuant d'être régulée par le régulateur quand la charge auxiliaire est alimentée, et la présence de tension sur la charge auxiliaire étant détectée afin de modifier la contre-réaction du régulateur.

Le dispositif d'alimentation objet de l'invention trouve application, notamment, à l'alimentation des circuits électriques de tout véhicule automobile ou analogue.

L'invention sera mieux comprise à la lecture de la description et à l'observation des dessins ci-après, dans lesquels :

- la figure 1 représente un schéma de principe d'un dispositif d'alimentation conforme à l'invention,
- la figure 2 représente un mode de réalisation avantageux d'un régulateur susceptible d'être utilisé dans un dispositif d'alimentation représenté en figure 1,
- la figure 3 représente une variante de réalisation avantageuse du dispositif d'alimentation dans lequel une commande automatique de la commutation en régime de surtension est effectuée en fonction de paramètres extérieurs,
- la figure 4a et la figure 4b représentent des schémas de réalisation de circuits électroniques mis en jeu dans le cas du dispositif représenté en figure 3, les paramètres étant constitués par exemple par la température du circuit de refroidissement du véhicule et une temporisation de retour au régime d'alimentation nominale.
- la figure 5 représente un schéma de réalisation du dispositif d'alimentation en surtension, dans le cas où la tension continue délivrée par l'alternateur, après redressement, est disponible par l'intermédiaire d'un premier demi-pont et d'un deuxième demi-pont alimentant chacun respectivement la charge d'utilisation principale et la charge auxiliaire.
- la figure 6 représente un mode de réalisation particulier du dispositif d'alimentation en surtension, plus particulièrement adapté en vue d'assurer une déconnexion d'alimentation en régime de surtension de la charge auxiliaire, les risques d'interaction entre les moyens d'alimentation de la charge d'utilisation et de la charge auxiliaire étant supprimés.

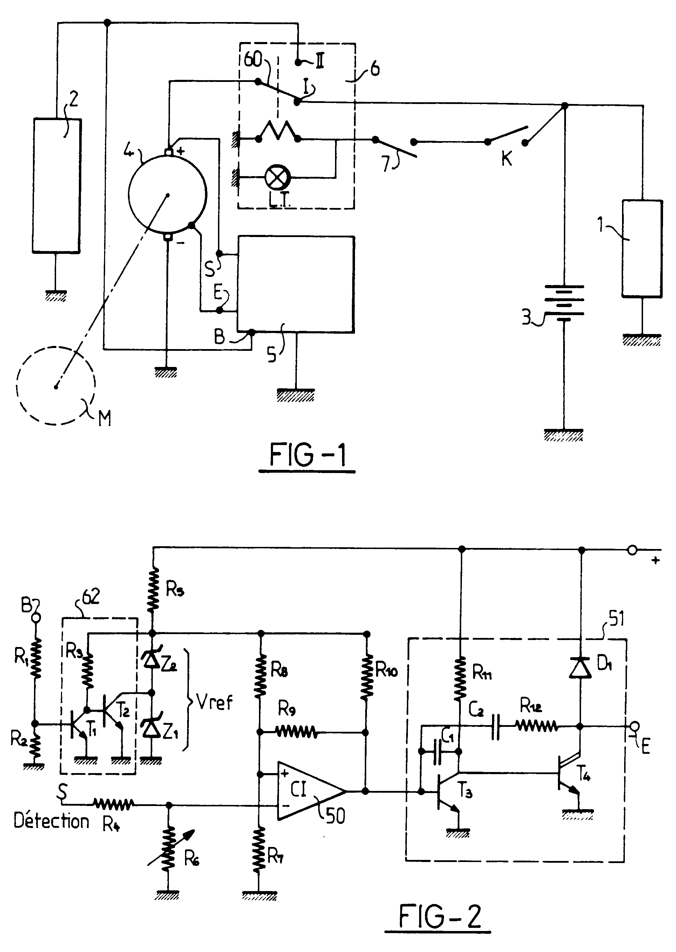

Le dispositif d'alimentation en énergie électrique d'un véhicule automobile, objet de l'invention, sera tout d'abord décrit en liaison avec la figure 1.

Selon cette figure, le véhicule automobile est réputé comporter un circuit principal 1, comprenant une charge d'utilisation principale, notamment, cette charge d'utilisation principale étant alimentée par une batterie d'accumulateurs 3, chargée par un alternateur 4 dont le courant d'excitation est régulé par un régulateur 5, ainsi que décrit précédemment. Le véhicule automobile comporte en outre des circuits auxiliaires, qui en fonctionnement, doivent être soumis à une alimentation temporaire en régime de surtension. Sur la figure 1, les circuits auxiliaires sont notés 2. En outre et pour mémoire, on rappelle que l'alternateur est normalement entraîné par un moteur noté M.

Conformément au dispositif d'alimentation objet de l'invention, celui-ci comprend, en outre, des moyens notés 6 de commutation commandée de la sortie stator redressée de l'alternateur 4, sur la charge auxiliaire 2. L'excitation de l'alternateur 4, suite à cette commutation est amenée, par l'intermédiaire du régulateur 5 à une valeur suffisante en fonction du régime du moteur M, pour assurer une alimentation en régime temporaire des circuits auxiliaires 2, en surtension et sous intensité réduite.

On comprendra ainsi que, lors de la mise en route du véhicule, le régime du moteur M au démarrage, correspondant à un régime de rotation à vitesse supérieure au régime de ralenti en raison notamment de la phase de démarrage du moteur, sous l'influence de systèmes d'enrichissement du mélange air/essence, systèmes dénommés starter selon la dénomination anglo-saxonne, la commande de l'excitation de l'alternateur, par l'intermédiaire du régulateur 5, permet d'obtenir une alimentation en surtension de la charge auxiliaire 2, sous intensité réduite.

Ainsi qu'il apparaît en outre en figure 1, les moyens de commutation 6 peuvent avantageusement être constitués par un relais 60 commandé par un interrupteur 7. L'interrupteur 7 est relié normalement à la batterie d'accumulateurs 3, par l'intermédiaire de la clé de contact du véhicule noté K. Conformément à l'objet de l'invention, le relais 60 assure d'une part en position normalement fermée, notée I sur la figure 1, la liaison de la sortie stator redressée de l'alternateur 4 à la charge d'utilisation principale 1 et à la batterie d'accumulateurs 3 et d'autre part, en position commandée, notée II sur la figure 1, la liaison de la sortie stator redressée de l'alternateur 4, à la charge auxiliaire 2.

Ainsi qu'il apparaît en outre en figure 1, les moyens de commutation 6 constitués par le relais 60 commandé, assurent en outre en position commandée notée II, la liaison de la sortie stator redressée de l'alternateur 4 à une entrée de commande d'excitation B du régulateur 5. On notera en fait que l'entrée de commande B du régulateur 5, est connectée, directement à la borne correspondant à la position commandée II du relais 60. Ainsi, le relais 60 est amené de la position normale de repos I, position dans laquelle l'alimentation normale de la charge d'utilisation 1 est assurée par l'alternateur et la batterie d'accumulateurs tampon 3 à la tension nominale de 14 volts, en position commandée II dans laquelle le circuit auxiliaire 2 est alimenté en surtension et sous intensité réduite, la charge d'utilisation 1 étant déconnectée.

Une description plus détaillée d'un régulateur 5 susceptible d'être utilisé pour la mise en oeuvre du dispositif d'alimentation tel que représenté en figure 1, sera maintenant donnée en liaison avec la figure 2.

Sur la figure précitée, on pourra observer que le régulateur peut comporter de manière avantageuse, un circuit comparateur 50, dont une première entrée négative constituant une entrée notée S du régulateur est reliée à la sortie stator redressée alternateur 4, par l'intermédiaire d'une résistance notée $R_4$. Une deuxième entrée positive du comparateur 50 est reliée à une tension de référence notée Vref sur la figure 2. Des moyens générateurs de courant notés 51, sont commandés par le circuit comparateur 50, ces moyens générateurs de courant comportant une sortie notée E, sortie excitation, directement connectée à la borne d'excitation de l'alternateur. La régulation de tension de l'alternateur s'effectue ainsi grâce à l'entrée S du régulateur branché sur la sortie positive de l'alternateur. Par sortie positive de l'alternateur, on comprendra bien entendu que la sortie considérée de l'alternateur correspond en fait à la tension redressée délivrée par l'alternateur. Ainsi qu'il apparaît en outre en figure 2, le régulateur 5 comprend également une entrée commande excitation B, reliée à la borne de commutation relais assurant en position commandée II la liaison de la sortie stator de l'alternateur 4 à la charge auxiliaire 2. L'entrée commande excitation B du régulateur 5 est reliée à la tension de référence du circuit comparateur, tension de référence notée Vref, par l'intermédiaire d'un circuit de commutation noté 62. Le circuit de commutation 62 comprend essentiellement deux transistors notés T1 et T2 montés en cascade, le transistor T2 étant connecté au point commun de deux diodes Zener notées Z1 et Z2 destinées à constituer la tension de référence Vref précédemment citée.

Les moyens générateurs de courant 51 comportent essentiellement deux transistors montés en cascade, un transistor noté T3 et un transistor noté T4, le transistor noté T4 fonctionnant en générateur de courant. L'entrée positive du circuit comparateur 50 est reliée à la tension de référence Vref, par l'intermédiaire d'un circuit de résistance noté R8, R9, R10, R7, ainsi que représenté sur la figure 2. La régulation de tension, en présence de commutation en position II commandée, s'effectue de la façon ci-après. L'entrée B du régulateur étant branchée sur la sortie positive de l'alternateur, la sortie positive alternateur étant considérée comme la tension de l'alternateur redressée, cette tension est amenée sur le circuit comparateur 50 via le pont de résistances R4, R6. La résistance R6 permet d'ajuster la tension d'alimentation en régime nominal classique, à une valeur convenable, par exemple 14,5 volts. L'entrée de commande excitation B correspond en fait à la prise d'information permettant d'indiquer l'enclenchement du relais 60 en position commandée II. Ainsi, lorsque le relais est au repos, position I, l'entrée B est reliée à la masse via la charge auxiliaire 2, le transistor T1 est bloqué et le transistor T2 est saturé. L'état de conduction précédemment décrit des transistors T1 et T2 permet, par l'intermédiaire des diodes Zener Z2 et par le transistor T2, d'avoir une référence de tension, laquelle est appliquée par le pont diviseur R8, R7 à l'entrée positive du comparateur 50. La résistance R9 permet d'obtenir l'hystérésis souhaitée pour l'obtention de courbes de régulation correctes du point de vue de leur pente, les valeurs des résistances R12 et des capacités C1, C2 des moyens générateurs de courant 51 étant également choisies dans ce but. Par contre, lorsque le relais 60 est enclenché, le relais étant amené en position commandée II, le potentiel au niveau de l'entrée B augmente, ce qui permet au transistor T1 de se saturer et d'entraîner le blocage du transistor T2.

La tension de référence à l'entrée positive du comparateur est ainsi modifiée, puisque du fait du blocage du transistor T2, la diode Zener Z1 est maintenant en conduction. La tension de régulation devient alors supérieure à la tension classique, la tension de régulation pouvant être amenée avantageusement à une valeur de l'ordre de 42 volts, soit sensiblement trois fois la valeur de la tension nominale de l'alternateur. La lampe témoin L.T. des moyens de commutation 6 ou relais 60, permet une signalisation du fonctionnement du dispositif d'alimentation objet de l'invention, en régime de suralimentation au conducteur du véhicule automobile. Ce dernier, en fonction des conditions extérieures d'utilisation du véhicule, pourra par la seule manoeuvre de l'interrupteur de commande 7, soit commander l'enclenchement du relais en position commandée notée II, si nécessaire, soit au contraire le relais 60 étant déjà dans la position II précitée, par commande de ce même interrupteur ramener le relais 60 en position de repos I, afin d'assurer la recharge de la batterie d'accumulateurs 3 dans les conditions normales d'alimentation à tension nominale de l'alternateur. Selon une variante d'exécution non limitative du régulateur 5 susceptible d'être utilisé dans les dispositifs d'alimentation, l'entrée S telle que décrite en figure 2, peut avantageusement être reliée à la sortie positive de l'alternateur 4, par l'intermédiaire d'une résistance de forte valeur, l'entrée de commande excitation B du régulateur étant alors supprimée, ainsi que le circuit de commutation 62 et la tension de référence Vref étant réalisée par une diode Zener de valeur de tension de Zener, convenablement choisie. Dans ce cas, le fonctionnement du régulateur est analogue au fonctionnement précédemment décrit.

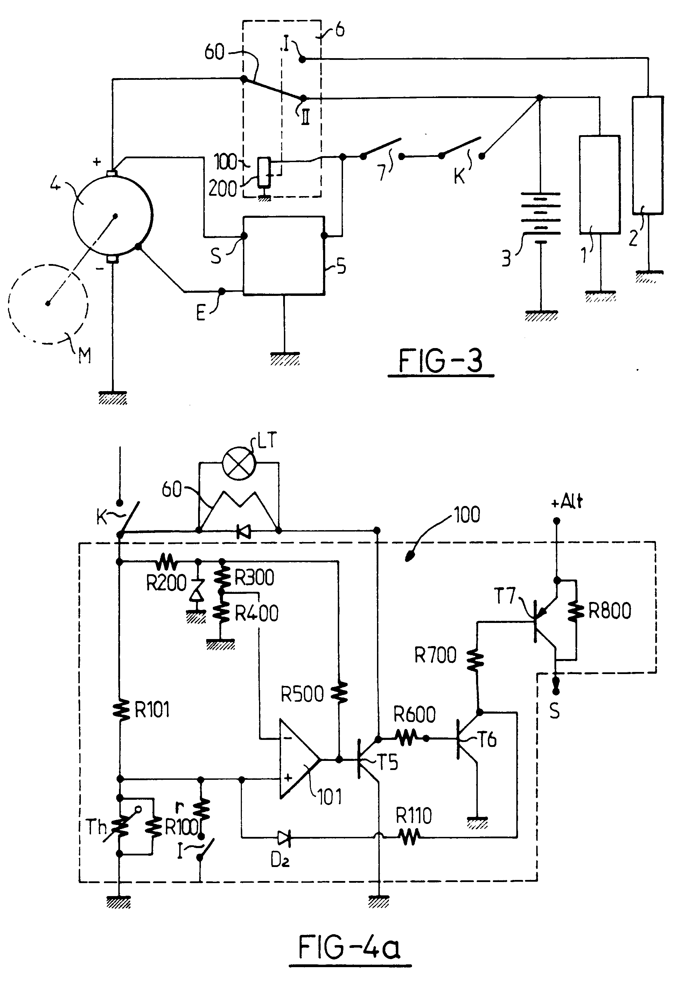

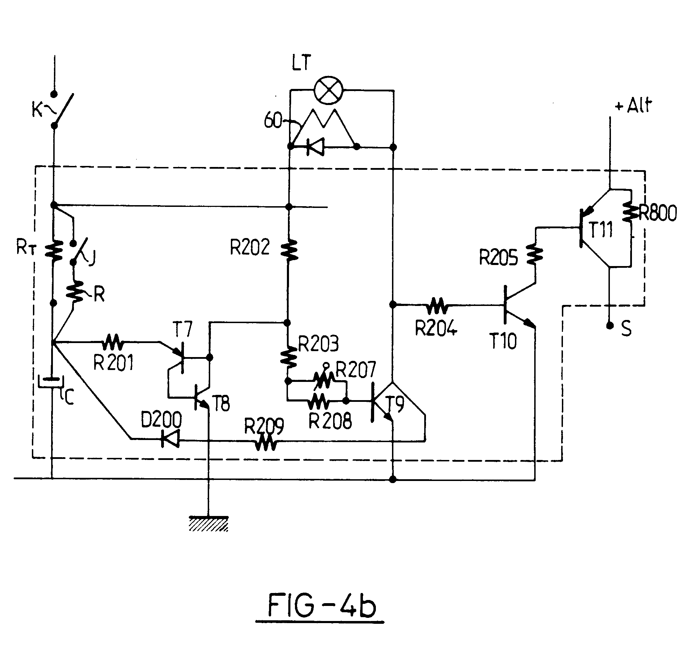

Un mode de réalisation avantageux du dispositif d'alimentation, dans lequel une commande automatique de la commutation en régime de surtension est effectuée en fonction de paramètres extérieurs au fonctionnement du véhicule, tels que par exemple la température des circuits de refroidissement de celui-ci ou éventuellement un délai de temporisation de retour du relais 60 en position de repos après enclenchement par l'utilisateur au moyen de l'interrupteur 7, sera maintenant décrit en liaison avec les figures 3 et 4a, 4b.

Conformément à la figure 3, les moyens de commutation 6 comportent en outre un détecteur de température noté 100 du circuit de refroidissement du véhicule. Sur la figure 3, le détecteur de température noté 100 a été représenté symboliquement par un bloc fonctionnel connecté directement entre la borne positive de l'alternateur 4 et l'entrée S du régulateur. Le détecteur 100 en fonction de la température détectée est adapté de façon à assurer sur une plage de valeurs de température, la commutation des moyens de commutation 60, en position de suralimentation de la charge auxiliaire 2.

Le détecteur de température 100 représenté schématiquement en figure 3, sera décrit plus en détail en liaison avec la figure 4a.

Sur cette figure, on notera que le détecteur de température 100 peut comprendre, à titre d'exemple non limitatif, un comparateur 101, recevant une tension de référence sur sa borne négative, et une tension représentative de la température du circuit de refroidissement du véhicule sur sa borne positive. Le circuit comparateur 101 commande un premier transistor de commutation noté T5, monté en émetteur commun, et dont le collecteur est chargé par exemple par l'enroulement du relais de commutation 60 assurant la commutation dans les positions de commutation II et les positions de repos I précédemment décrites. En outre, le transistor T5 est connecté en cascade à deux transistors T6 et T7, les transistors T6 et T7 étant par exemple des transistors complémentés. Le transistor T6 est par exemple monté en émetteur commun et le transistor T7 est destiné à assurer par commutation le court-circuit d'une résistance notée R800, normalement connectée entre la borne positive de l'alternateur 4 et la borne S du régulateur. Une résistance variable en fonction de la température, résistance notée TH sur la figure 4a, détecte la température du circuit de refroidissement du véhicule. Ce élément est placé dans un pont résistif noté R101, R, R100, sur la figure 4a. La résistance variable en fonction de la température permet de comparer une tension fonction de cette température et représentative de celle-ci à une tension de référence donnée par une diode Zener et par un pont résistif R300, R400 sur la figure 4a. Le fonctionnement du détecteur de température décrit sur la figure précitée est la suivant : au départ, le transistor T5 est saturé et le transistor T6 est bloqué, ce qui permet de modifier le réglage du régulateur grâce à la résistance R800 précitée placée en série avec l'entrée S du régulateur. Le relais 60 est sous tension et dans ce cas, ce dernier est alors normalement amené en position commandée, position notée II précédemment. La charge auxiliaire 2 est alors alimentée en régime de surtension. Le voyant noté L.T.1 signale ce fonctionnement. Lorsque la température du circuit de refroidissement atteint une valeur déterminée, le système bascule et reste dans cette position grâce au circuit de contre-réaction ou de verrouillage constitué par la résistance 110 et la diode notée D2, ce circuit assurant la liaison entre la sortie collecteur du transistor T6 et l'entrée positive du circuit comparateur 101. Le transistor T5 est alors bloqué alors que le transitor T6 est lui-même saturé, ce qui permet alors, du fait du basculement du relais 60, le retour de ce dernier en position de repos notée I et l'alimentation du circuit classique d'utilisation 1 et de la batterie d'accumulateurs 3 par l'alternateur sous la tension nominale de 14 volts sensiblement. Un circuit de court-circuit noté r,I de la cellule de détection de température permet sur actionnement de l'interrupteur I d'amener l'entrée positive du comparateur 101 à la tension de référence et ainsi d'assurer le retour du relais 60 en position de repos noté I et l'alimentation en vue de la recharge de la batterie d'accumulateurs 3 par l'alternateur 4 sous tension nominale de celui-ci.

Ainsi qu'il a déjà été indiqué en liaison avec la figure 3, les moyens de commutation 60 peuvent comporter,avantageusement, des moyens de temporisation 200 à l'ouverture de la commande des moyens de commutation. Par temporisation à l'ouverture de la commande des moyens de commutation 60, on entend en fait une temporisation du retour du relais de commutation 60 à sa position de repos notée I, cette temporisation assurant en fait une fonction de sécurité par un retour à la position de repos du relais 60, après un temps déterminé. Les moyens de temporisation 200 seront décrits plus en détail en liaison avec la figure 4b. Sur cette figure, les moyens de temporisation 200 sont représentés comme pouvant comporter un circuit à résistance capacité, résistance notée RT, capacité C. Le circuit à résistance capacité RT, C, est connecté à la clé de contact K et alimenté par la batterie d'accumulateurs 3, par l'intermédiaire de celle-ci. A la fermeture de la clé de contact K, une temporisation est enclenchée, temporisation consistant en la charge de la capacité C à travers la résistance de temporisation RT. Le relais 60 est alors alimenté par T9, conducteur, ce qui permet de basculer le relais 60 en position commandée notée II, le circuit auxiliaire 2 étant alors alimenté sous une tension d'environ 42 volts, grâce à la résistance R800 précédemment décrite qui modifie le réglage classique du régulateur. Dans cette situation, le transitor T9 est saturé, et alimente le relais 60, le transistor T10 et le transistor T11 sont bloqués. Le voyant LT1 signale l'enchenchement du relais 60. Lorsque la tension aux bornes de la capacité de temporisation C atteint la valeur du potentiel fixé par le pont de polarisation de base du transistor T9, résistance R202, R203 et R207 en parallèle avec la résistance R208, le système à transitors T7, T8, décharge la capacité de temporisation C et bloque le transitor T9. Le système est alors verrouillé dans cette situation, le transitor T9 étant bloqué grâce au circuit résistance 209, diode D200. Dans cette situation, le relais 60 est alors désexcité et la résistance R800 est court-circuitée par le transistor T11 à l'état saturé ce qui permet d'alimenter la batterie d'accumulateurs sous la tension nominale de l'alternateur 4. Cette temporisation peut être rendue sensible à la température extérieure avantageusement, grâce à la résistance sensible à la température R207. En outre, le circuit constitué par l'interrupteur J et la résistance k connectée en série permet, par le court-circuit de la résistance de temporisation RT, la suppression de moyens de temporisation et la charge directe de la batterie d'accumulateurs 3, le relais 60 restant indéfiniment en position de repos notée I.

On notera enfin que la commande des moyens de commutation 6 constitués par un interrupteur 7 est avantageusement au moins fonctionnellement couplée à des moyens d'accélération du régime du moteur M, ces moyens d'accélération pouvant être de manière connue en soi, un accélérateur manuel, une manette d'enrichissement du mélange air/carburant telle que starter automatique ou semi-automatique, ou même pédale d'accélérateur ou analogues.

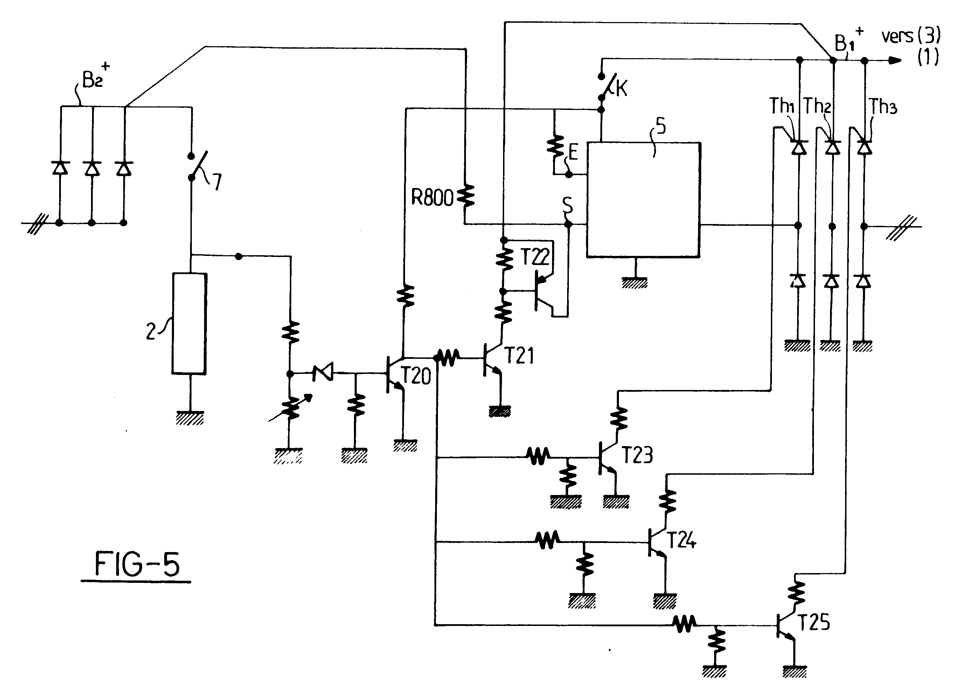

Un mode de réalisation avantageux, non limitatif, du dispositif d'alimentation en surtension, sera maintenant décrit en référence à la figure 5 dans le cas où la tension continue délivrée par l'alternateur ,après redressement ,est disponible par l'intermédiaire d'un premier demi-pont noté B1 alimentant la charge utile 1 et d'un deuxième demi-pont B2, alimentant la charge auxiliaire 2.Dans le mode de réalisation précitée, on remarquera que les moyens de commutation 6 réalisés par le relais 60, ainsi que décrits précédemment, sont avantageusement remplacés par des thyristors notés TH1, TH2, TH3, lesquels remplacent les diodes habituelles du demi-pont positif B1 de l'alternateur 4, pour assurer ainsi la coupure de l'alimentation de la borne B1 assurant l'alimentation de la batterie d'accumulateurs 3 et de la charge utile d'utilisation 1, lorsque la fonction de commande est sollicitée après manoeuvre de la clé de contact notée K et de l'interrupteur de commande 7. Sur cette même figure 5, on notera que l'interrupteur 7 est maintenant connecté à la borne B2 du deuxième demi-pont positif de l'alternateur et alimente directement la charge auxiliaire 2. Dès la manoeuvre de l'interrupteur 7 par le conducteur du véhicule pour obtenir l'enclenchement de l'alimentation en surtension temporaire de la charge auxiliaire 2, les circuits de commutation constitués par les transistors T20, T21 et T22 transmettent le signal de présence tension aux bornes de la charge auxiliaire 2, à l'entrée S du régulateur 5. Par un fonctionnement analogue de celui-ci, le courant d'excitation disponible en sortie excitation E du régulateur 5 est amené à une valeur suffisante pour assurer le fonctionnement de l'alternateur 4 en régime de surtension. Simultanément, le signal de commutation délivré par le transistor T20 commande trois transistors de déclenchement notés T23, T24, T25, lesquels connectés aux électrodes de déclenchement de thyristors TH1, TH2, TH3, permettent l'extinction de ces derniers, et la déconnexion de la batterie d'accumulateurs 3 et de la charge d'utilisation 1 du circuit d'alimentation constitué par le premier demi-pont positif B1.

Ce mode de réalisation commandé par thyristors présente pour avantage de limiter ainsi le nombre des connexions nécessaires pour la mise en oeuvre du dispositif précédemment décrit.

On a ainsi décrit un dispositif d'alimentation électrique des circuits auxiliaires d'une automobile en régime temporaire de surtension particulièrement performant, le caractère performant apparaissant notamment, du fait de la diversité des possibilités de commande automatique du dispositif d'alimentation, objet de l'invention, ainsi que des performances électriques de celui-ci. On notera en effet que dans le cas d'une utilisation lors du démarrage du moteur du véhicule, notamment dans des conditions de température extérieures très basses, les circuits de dégivrage de la lunette arrière et du pare-brise, par exemple devant être suralimentés pendant un temps relativement bref, le dispositif d'alimentation tel que précédemment décrit, permet pour un régime de fonctionnement du moteur en situation de commande de ce dernier par le starter, régime de fonctionnement correspondant sensiblement à un nombre de tours de 2000 tours par minute, une alimentation en surtension. Le régime d'alimentation en surtension du dispositif d'alimentation objet de l'invention peut facilement et sans inconvénient être établi à une alimentation sous 42 volts, soit sensiblement trois fois la tension nominale de l'alternateur, l'intensité d'alimentation pouvant alors être réduite à 80 % de la valeur nominale par exemple. Dans ce cas, on notera alors que du fait de la réduction de l'intensité nominale, les pertes cuivre dans l'alternateur, pertes par effet Joule sont sensiblement réduites, alors que la puissance effectivement délivrée au circuit auxiliaire 2 est par exemple multipliée par un facteur de l'ordre de 3.

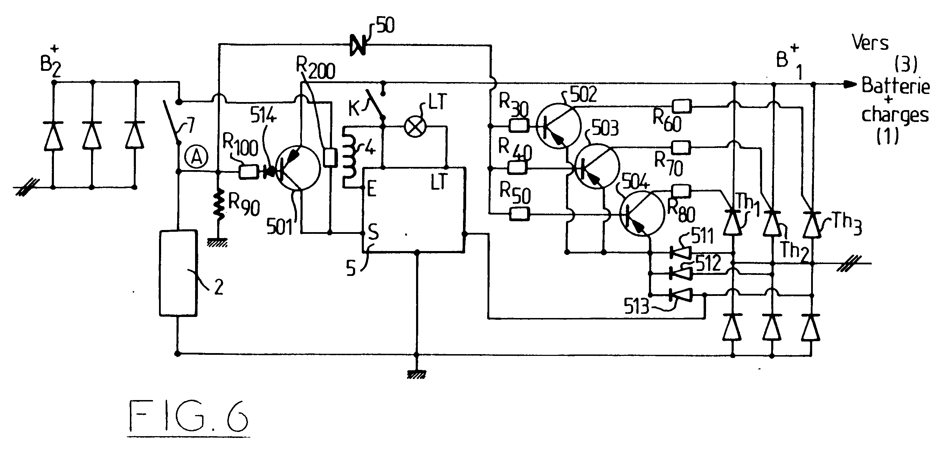

Le mode de réalisation ci-après représenté en figure 6 se rapporte à un mode de réalisation particulier d'un dispositif d'alimentation en régime temporaire des circuits auxiliaires d'un véhicule automobile.

Le présent mode de réalisation a pour objet un mode particulier de réalisation du dispositif décrit précédemment dans la description, ce mode de réalisation étant plus particulièrement adapté en vue d'assurer une déconnexion d'alimentation en régime de surtension de la charge auxiliaire, les risques d'interaction entre les moyens d'alimentation de la charge d'utilisation et de la charge auxiliaire étant supprimés.

Selon le mode de réalisation particulièrement avantageux précité, le dispositif d'alimentation électrique en régime temporaire des circuits auxiliaires d'un véhicule automobile comprend également un circuit principal alimenté par une batterie d'accumulateurs chargée par un alternateur dont le courant d'excitation est régulé par un régulateur ainsi que décrit précédemment dans la description.

Il est remarquable en ce que les moyens de commutation commandée de la sortie stator de l'alternateur sur la charge auxiliaire comportent des thyristors montés dans le demi-pont redresseur positif de l'alternateur. Chacun des thyristors est commandé par un transistor de commande dont l'électrode de collecteur est alors reliée à l'électrode de déclenchement du thyristor correspondant et dont l'électrode d'émetteur est reliée par l'intermédiaire d'au moins une diode à la borne d'entrée alternateur du pont redresseur. L'électrode de base des transistors est reliée en parallèle par l'intermédiaire d'une diode Zener à l'interrupteur de commande d'alimentation de la charge auxiliaire.

La figure 6 ci-après représente un schéma électrique du mode de réalisation particulièrement avantageux correspondant.

Dans la figure 6 précitée, les mêmes références représentent les mêmes éléments que dans la description précédente.

Ainsi, sur la figure 6, sont représentés la charge auxiliaire 2, alimentée par le demi-pont $B_2^+$ par l'intermédiaire de l'interrupteur 7 de commande d'alimentation de charge auxiliaire, le régulateur 5 dont la borne E est reliée à l'enroulement d'excitation de l'alternateur 4 et la borne S est connectée sur la sortie positive de l'alternateur délivrée par le demi-pont redresseur $B_2^+$ . La clef de contact K du véhicule permet la mise sous tension du dispositif et la détection du fonctionnement en régime d'alimentation ou de la non alimentation de la charge auxiliaire par l'intermédiaire de la lampe témoin LT.

Ainsi qu'il apparaît en outre sur la figure 6 précitée, les moyens de commutation commandée de la sortie stator de l'alternateur sur la charge auxiliaire 2 comportent des thyristors notés TH1, TH2, TH3, lesquels sont montés dans le demi-pont redresseur positif $B_1^+$ de l'alternateur.

Chacun des thyristors précités est commandé par un transitor de commande noté 502, 503, 504, dont l'électrode de collecteur est via R60, R70, R80 reliée à l'électrode de déclenchement du thyristor correspondant, et dont l'électrode de l'émetteur est reliée par l'intermédiaire d'un trio de diodes noté 511, 512, 513 à la borne d'entrée alternateur du pont redresseur $B_1^+$ . L'électrode de base des transistors de commande 502, 503, 504 est reliée en parallèle par l'intermédiaire d'une diode Zener notée 50 à un interrupteur 7 de commande d'alimentation de la charge auxiliaire 2.

Ainsi qu'il apparaît en outre sur la figure 6 précitée, l'entrée S du régulateur 5 est connectée d'une part à la sortie $B_2^+$ du demi-pont redresseur alimentation la charge auxiliaire 2 par l'intermédiaire d'une résistance de polarisation R200 et à l'interrupteur de commande d'alimentation de charge auxiliaire 7, par l'intermédiaire d'un transistor 501 dont l'électrode d'émetteur est directement reliée à la borne $B_1^+$ du demi-pont redresseur de l'alternateur et dont l'électrode de collecteur est directement connectée à l'entrée S du régulateur 5. L'électrode de base du transistor 501 est reliée à l'interrupteur 7 de commande de charge auxiliaire par l'intermédiaire d'une diode 514 et d'un circuit de polarisation constitué par les résistances R100 et R90, ainsi que représentées sur la figure 6 précitée.

Le fonctionnement du dispositif représenté en figure 6 est le suivant :

A la mise en route du véhicule, l'utilisateur met le dispositif sous-tension par l'intermédiaire de la clé de contact notée K.

En l'absence de mise en route de l'alimentation de la charge auxiliaire 2, l'interrupteur de commande 7 étant maintenu ouvert par l'utilisateur, le transistor 501, transistor de type PNP par exemple, se trouve à l'état saturé en raison de la mise au potentiel de référence de la base de ce transistor, par l'intermédiaire des résistances R100 et R90. La tension collecteur-émetteur du transistor 501 est alors la tension de saturation et l'entrée S du régulateur est directement portée au potentiel $B_1^+$ à la chute de tension de saturation près, laquelle peut être négligée.

De la même façon, les transistors de commande 502, 503, 504 sont saturés, les électrodes de base de ces transistors étant portées au potentiel de référence par l'intermédiaire de la résistance 90 et des résistances de polarisation, respectives R30, R40 et R50. Les transistors de commande 502, 503, 504, de type PNP également, sont alors saturés, ce qui permet la mise en conduction des thyristors TH1, TH2, TH3 grâce au courant conduit à l'électrode de commande respective de ces thyristors, par les résistances de polarisation R60, R70, R80. Le pont redresseur $B_1^+$ assure alors l'alimentation de la charge d'utilisation normale 1 et de la batterie 3.

Lorsque l'utilisateur ferme l'interrupteur de commande d'alimentation de la charge auxiliaire 2, en vue d'assurer l'alimentation de cette dernière, le potentiel au point A, point de jonction de la résistance 100 et de la résistance 90, devient égal à la tension délivrée par l'alternateur après redressement, cette augmentation de tension ayant pour effet de bloquer les transistors 501, 502, 503, 504. L'entrée S du régulateur 5 est alors alimentée par l'intermédiaire de la résistance R200, par la sortie $B_2^+$ du pont redresseur d'alimentation de la charge auxiliaire 2. La tension de régulation appliquée sur l'entrée S est alors la tension délivrée par le demi-pont redresseur $B_2^+$ augmentée par rapport à la tension de régulation précédente délivrée par le pont redresseur de l'alternateur $B_1^+$. La tension peut ainsi, par exemple, être augmentée de 14 volts à 42 volts.

Le blocage des transistors 502, 503, 504 a pour effet de bloquer les thyristors correspondants TH1, TH2, TH3. Le pont redresseur $B_1^+$ est ainsi commuté et n'alimente plus la charge du circuit principal 1 et la batterie 3. Ceci a pour effet de favoriser l'alimentation de la charge auxiliaire 2 en charge rapide par l'intermédiaire du demi-pont redresseur $B_2^+$. La diode Zener 50 permet d'éviter une éventuelle conduction des thyristors TH1, TH2, TH3, après blocage de ces derniers, conduction qui pourrait être provoquée par les différences de chute de tension aux bornes des diodes 511, 512, 513, reliant des émetteurs des transistors 502, 503, 504 à la borne d'entrée d'alimentation du pont redresseur de l'alternateur $B_1^+$ et aux bornes des diodes de puissance constituant le demi-pont redresseur $B_2^+$.

Lors de la réouverture de l'interrupteur de commande d'alimentation de charge auxiliaire 7, le fonctionnement tel que décrit précédemment reprend, et l'on se trouve en situation d'une charge de batterie normale sous tension nominale.

La résistance R90 permet en cas de coupure de la charge rapide ou de l'alimentation de la charge auxiliaire 2 d'assurer une tension égale à la tension nominale, sur la batterie d'accumulateurs 3, lorsque l'interrupteur 7 est ouvert. La diode 514 assurant la liaison entre l'électrode de base du transistor 501 et la résistance 100 protège en inverse la jonction base émetteur du transistor 501, lorsque l'interrupteur 7 de commande d'alimentation de la charge auxiliaire 2 est fermée.

On a ainsi décrit un dispositif d'alimentation électrique en régime temporaire des circuits auxiliaires d'un véhicule automobile, dont le circuit principal comprend une charge d'utilisation principale alimentée par une batterie d'accumulateurs, particulièrement performant compte tenu du fait que les moyens de commutation d'alimentation de la charge auxiliaire et du circuit principal sont parfaitement séparés, aucune interaction entre l'alimentation de la charge auxiliaire et de la charge principale ne pouvant intervenir.

**Revendications**

1. Dispositif d'alimentation électrique en régime temporaire des circuits auxiliaires (2) d'un véhicule automobile dont le circuit principal (1) comprend une charge d'utilisation principale alimentée par une batterie d'accumulateurs (3) chargée par un alternateur (4) dont le courant d'excitation est régulé par un régulateur (5), ledit dispositif d'alimentation comportant en outre des moyens (6) de commutation commandée de la sortie stator dudit alternateur sur la charge auxiliaire (2), l'excitation dudit alternateur (4), suite à cette commutation, étant amenée par l'intermédiaire dudit régulateur (5) à une valeur suffisante, en fonction du régime du moteur (M), pour assurer une alimentation, en régime temporaire, desdits circuits auxiliaires (2) en surtention et sous intensité réduite, caractérisé en ce que lesdits moyens de commutation (6) sont constitués par un relais (60) commandé par un interrupteur (7), ledit relais (60) assurant, d'une part, en position normalement fermée (1) la liaison de la sortie stator dudit alternateur (4) à la charge d'utilisation principale (1) et à la batterie (3) et, d'autre part, en position commandée (11), la liaison de la sortie stator dudit alternateur (4) à ladite charge auxiliaire (2) ainsi que la liaison de la sortie stator dudit alternateur (4) à une entrée de commande d'excitation (B) du régulateur (5), la tension de sortie de l'alternateur continuant d'être régulée par le régulateur quand la charge auxiliaire est alimentée, et la présence de tension sur la charge auxiliaire étant détectée afin de modifier la consigne du régulateur.

2. Dispositif d'alimentation électrique en régime temporaire des circuits auxiliaires (2) d'un véhicule automobile dont le circuit principal (1) comprend une charge d'utilisation principale alimentée par une batterie d'accumulalteurs (3) chargée par un alternateur (4) dont le courant d'excitation est régulé par un générateur (5), ledit dispositif d'alimentation comportant en outre des moyens (6) de commutation commandée de la sortie stator dudit alternateur sur la charge auxiliaire (2), l'excitation dudit alternateur (4), suite à cette commutation, étant amenée par l'intermédiaire dudit régulateur (5) à une valeur suffisante, en fonction du régime du moteur (M), pour assurer une alimentation, en régime temporaire, desdits circuits auxiliaires (2) en surtention et sous intensité réduite, caractérisé en ce que les moyens (6) de commutation commandée de la sortie stator de l'alternateur sur la charge auxiliaire (2) comportent des thyristors (TH1, TH2, TH3) montés dans le demi-pont redresseur positif ($B_1^+$) de l'alternateur, chacun desdits thyristors étant commandé par un transistor de commande (502, 503, 504) dont l'électrode de collecteur est reliée à l'électrode de déclenchement du thyristor correspondant et dont l'électrode d'émetteur est reliée par l'intermédiaire d'au moins une diode (511, 512, 513) à la borne d'entrée alternateur du pont redresseur ($B_1^+$),

l'électrode de base desdits transistors étant reliée en parallèle par l'intermédiaire d'une diode Zener (50) à un interrupteur (7) de commande d'alimentation de la charge auxiliaire (2), et en ce que l'entrée (S) du régulateur (5) est connectée à l'interrupteur de commande d'alimentation de charge auxiliaire (7) par l'intermédiaire d'un transistor (501) dont l'électrode d'émetteur est directement reliée à la borne ($B_1^+$) du demi-pont redresseur et dont l'électrode de collecteur est directement connectée à l'entrée (S) du régulateur, l'électrode de base du transistor (501) étant reliée à l'interrupteur (7) de commande de charge auxiliaire par l'intermédiaire d'une diode (514) et d'un circuit de polarisation (R100, R90), et l'électrode de collecteur du transistor et l'entrée (S) du régulateur (5) étant connectées à la sortie ($B_2^+$) du demi-pont redresseur alimentant la charge auxiliaire (2) par l'intermédiaire d'une résistance de polarisation (R200), la tension de sortie de l'atternateur continuant d'être régulée par le régulateur quand la charge auxiliaire est alimentée, et la présence de tension sur la charge auxiliaire étant détectée afin de modifier la contre-réaction du régulateur.

3. Dispositif selon le revendication 1, caractérisé en ce que ledit régulateur comprend :
   - un circuit comparateur (50) dont une première entrée négative, constituant une entrée (S) du régulateur est reliée à la sortie stator alternateur (4) par l'intermédiaire d'une résistance et dont une deuxième entrée positive est reliée à une tension de référence (Vref),
   - des moyens générateurs de courant (51), commandés par le circuit comparateur, lesdits moyens générateurs de courant comportant une sortie (E), excitation, directement connectée à la borne d'excitation de l'alternateur.

4. Dispositif selon les revendications 1 et 3, caractérisé en ce que ledit régulateur (5) comprend en outre une entrée commande excitation (B) reliée à la borne de commutation relais assurant, en position commandée (11), la liaison de la sortie stator de l'alternateur (4) à la charge auxiliaire (2).

5. Dispositif selon la revendication 4, caractérisé en ce que l'entrée commande excitation (B) est reliée à la tension de référence du circuit comparateur par l'intermédiaire de transistors de commutation (62).

6. Dispositif selon l'une des revendications 1 à 4, caractérisé en ce que lesdits moyens de commutation comportent en outre un détecteur de température (100) du circuit de refroidissement du véhicule, ledit détecteur (100) en fonction de ladite température détectée étant adapté de façon à assurer sur une plage de valeurs de température la commutation desdits moyens de commutation (6) en position de suralimentation de la charge auxiliaire.

7. Dispositif selon l'une des revendications 1 à 6, caractérisé en ce que lesdits moyens de commutation (6) comportent en outre des moyens de temporisation (200) à l'ouverture de la commande des moyens de commutation.

8. Dispositif selon l'une des revendications 1 à 7, caractérisé en ce que la commande des moyens de commutation constituée par un interrupteur (7) est, au moins fonctionnellement, couplée à des moyens d'accélération du régime du moteur (M) tels que, accélérateur manuel, manette d'enrichissement du mélange air/carburant, starter automatique ou semi-automatique, pédale d'accélérateur ou analogue.

9. Dispositif selon la revendication 2, caractérisé en ce que les moyens de commutation (6) sont constitués par des thyristors (TH1, TH2, TH3), montés dans le demi-pont positif de sortie alternateur, alimentant la batterie d'accumulateurs (3) et la charge d'utilisation (1).

10. Dispositif selon la revendication 2, caractérisé en ce que ledit régulateur comprend :
 - un circuit comparateur (50) dont une première entrée négative, constituant une entrée (S) du régulateur est reliée à la sortie stator alternateur (4) par l'intermédiaire d'une résistance et dont une deuxième entrée positive est reliée à une tension de référence (Vref),
 - des moyens générateurs de courant (51), commandés par le circuit comparateur, lesdits moyens générateurs de courant comportant une sortie (E), excitation, directement connectée à la borne d'excitation de l'alternateur.

**Claims**

1. A device for temporary supply of electricity to auxiliary circuits (2) of an automobile, said automobile having an engine and a main circuit (1) comprising a main load, a battery (3) supplying said main load, an alternator (4) for charging said battery, said supply device comprising a regulator (5) regulating excitation current of said alternator and commutation means (6) controlled from a stator output of said alternator (4) to said auxiliary load (2), said excitation of said alternator (4), following commutation, being taken via said regulator (5) to a sufficient value, as a function of the state of said engine (M), for ensuring a temporary supply of said auxiliary circuits (2) at overvoltage and reduced current, characterized in that said commutation means (6) are constituted by a relay (60) controlled by a switch (7), said relay (60) ensuring, on the one hand, in a normal closed position (I) connection of said stator output of said alternator (4) to said main load (1) and to said battery (3) and, on the other hand, in controlled position (II), connection of said stator output of said alternator (4) to said auxiliairy load (2), as well as connection of said stator outlet of said alternator (4) to a control input (B) for excitation of said regulator (5), the output voltage of the alternator being kept controlled by the regulator when the auxiliary load is supplied, and the presence of voltage at the auxiliary load being detected so as to modify the value of regulation.

2. A device for temporary supply of electricity to auxiliary circuits (2) of an automobile, said automobile having an engine and a main circuit (1) comprising a main load, a battery (3) supplying said main load, an alternator (4) for charging said battery, said supply device comprising a regulator (5) regulating excitation current of said alternator (4) and commutation means (6) controlled from a stator output of said alternator to said auxiliary load (2), said excitation of said alternator (4), following commutation, being taken via said regulator (5) to a sufficient value, as a function of the state of said engine (M), for ensuring a temporary supply of said auxiliary circuits (2) at overvoltage and reduced current, characterized in that said commutation means (6) controlled from said stator output of said alternator to said auxiliary load (2) comprise thyristors (TH1, TH2, TH3) connected in the positive rectifying semi-bridge ($B_1^+$) of said alternator, each of said thyristors being controlled by a control transistor (502, 503, 504) of which the collector electrode is connected to the triggering electrode of said corresponding thyristor and of which the emitter electrode is connected via at least one diode (511, 512, 513) to a contact of an alternator input of said rectifier bridge ($B_1^+$), the base electrode of said transistors being connected in parallel via a Zener diode (50) to a control switch (7) for supply of said auxiliary load (2), and in that said input (S) of said regulator (5) is connectted to said control switch for supply of said auxiliary load (2) via a transistor (501) of which the emitter electrode is directly connected to said contact ($B_1^+$) of said rectifier semi-bridge and of which the collector electrode is directly connected to said input (S) of said regulator, the base electrode of said transistor (501) being connected to said control switch (7) for said auxiliary load via a diode (514) and a polarisation circuit (R100, R90) and, said collector electrode of said transistor and the input (S) of said regulator (5) being connected to said output ($B_2^+$) of said rectifier semi-bridge feeding said auxiliary load via a polarisation resistor (R200), the output voltage of the alternator being kept controlled by the regulator when the auxiliary load is supplied, and the presence of voltage at the auxiliary load being detected so as to modify the value of regulation.

3. A device according to claim 1, wherein said regulator comprises :
- a comparator circuit (50) of which a first negative input, constituting an input (S) of said regulator, is connected to said alternator stator output (4) via a resistance and of which a first positive input is connected to a reference voltage (Vref), and
- current generator means (51), controlled by said comparator circuit, said current generator means comprising an excitation output (E) directly connected to an excitation contact of said alternator.

4. A device according to claims 1 and 3, wherein said regulator (5) further comprises an excitation control input (B) connected to said contact of said commutation relay ensuring, in said controlled position (II), connection of said stator output of said alternator (4) to said auxiliary load (2).

5. A device according to claim 4, comprising commutation transistors (62) for connecting said excitation control input (B) to said reference voltage of said comparator circuit.

6. A device according one of claims 1 to 5, wherein said commutation means further comprise a detector (100) of the temperature of a cooling circuit of said automobile, said detector (100) in accordance with said detected temperature being adapted in a manner to ensure throughout a range of values of temperature commutation of said commutation means (6) in an over-supply position of said auxiliary load.

7. A device according to one of claims 1 to 6, wherein said commutation means (6) further comprise means (200) for delaying opening of a control for said commutation means.

8. A device according to one of claims 1 to 7, comprising a switch (7) constituting a control of said commutation means, said switch being, at least functionally, coupled to engine (M) acceleration means chosen amongst a manual accelerator, an air/gas mixture enrichment control, an automatic or semi-automatic choke, an accelerator pedal or the like.

9. A device according to claim 2, comprising thyristors (TH1, TH2, TH3), constituting said commutation means (6) and connected in a positive semi-bridge of the alternator output, supplying said battery (3) and said main load (1).

10. A device according to claim 2, comprising :
- a comparator circuit (50) of which a first negative input (S) constituting an input of said regulator, is connected to said alternator stator output (4) via a resistance and of which a first positive input is connected to a reference voltage (Vref), and
- current generator means (51), controlled by said comparator circuit, said current genarator means comprising an excitation output (E) directly connected to an excitation contact of said alternator.

**Patentansprüche**

1. Stromversorgungsvorrichtung unter zeitweiligem Überspannungszustand für die Nebenschaltungen (2) eines Kraftfahrzeuges, dessen Hauptstromkreis (1) eine Hauptnutzlast enthält, die aus einer Akku-Batterie (3) gespeist wird, welche durch einen Wechselstromgenerator (4) geladen wird, dessen Erregerstrom durch einen Regler (5) reguliert wird, wobei die genannte Versorgungsvorrichtung außerdem Mittel (6) für die gesteuerte Umschaltung des Statorausgangs des genannten Wechselstromgenerators auf die Hilfslast (2) aufweist, während die Erregung des genannten Wechselstromgenerators (4) infolge dieser Umschaltung mit Hilfe des Reglers (5) auf einen Wert gebracht wird, der entsprechend der Motordrehzahl (M) ausreicht, um eine Versorgung der genannten Hilfsstromkreise (2) unter zeitweiligem Überspannungszustand und mit reduzierter Stromstärke zu gewährleisten, **dadurch gekennzeichnet,** daß die genannten Umschaltmittel (6) aus einem durch einen Schalter (7) gesteuerten Relais (60) bestehen, wobei das genannte Relais (60) einerseits, in Ruhestellung (I), die Verbindung zwischen dem Statorausgang des genannten Wechselstromgenerators (4) und der Hauptnutzlast (1) sowie der Batterie (3) und andererseits, in Arbeitsstellung (II), die Verbindung zwischen dem Statorausgang des genannten Wechselstromgenerators (4) und der genannten Hilfslast (2) sowie die Verbindung zwischen dem Statorausgang des genannten Wechselstromgenerators (4) und einem Erregereingang (B) des Reglers (5) gewährleistet, wobei die Ausgangsspannung des Wechselstromgenerators weiterhin durch den Regler geregelt wird, wenn die Hilfslast zugeführt wird, und wobei das Vorhandensein von Spannung an der Hilfslast erfaßt wird, um den Einstellwert des Reglers zu modifizieren.

2. Stromversorgungsvorrichtung unter zeitweiligem Überspannungszustand für die Nebenschaltungen (2) eines Kraftfahrzeuges, dessen Hauptstromkreis (1) eine Hauptnutzlast enthält, die aus einer Akku-Batterie (3) gespeist wird, welche durch einen Wechselstromgenerator (4) geladen wird, dessen Erregerstrom durch einen Regler (5) reguliert wird, wobei die genannte Versorgungsvorrichtung außerdem Mittel (6) für die gesteuerte Umschaltung des Statorausgangs des genannten Wechselstromgenerators auf die Hilfslast (2) aufweist, während die Erregung des genannten Wechselstromgenerators (4) infolge dieser Umschaltung mit Hilfe des Reglers (5) auf einen Wert gebracht wird, der entsprechend der Motordrehzahl (M) ausreicht, um eine Versorgung der genannten Hilfsstromkreise (2) unter zeitweiligem Überspannungszustand und mit reduzierter Stromstärke zu gewährleisten, **dadurch gekennzeichnet,** daß die Mittel (6) zur geregelten Umschaltung des Statorausgangs des Wechselstromgenerators an der Hilfslast (2) über Thyristoren (TH1, TH2, TH3) verfügen, die in der positiven Gleichrichter-Halbbrücke ($B^+_1$) des Wechselstromgenerators eingebaut sind, wobei jeder der genannten Thyristoren durch einen Steuertransistor (502, 503, 504) gesteuert wird, dessen Kollektorelektrode mit der Auslöseelektrode des entsprechenden Thyristors verbunden ist und dessen Emitterelektrode über wenigstens eine Diode (511, 512, 513) mit der Wechselstromgenerator-Eingangsklemme der Gleichrichterbrücke ($B^+_1$) verbunden ist, während die Basiselektrode der genannten Transistoren über eine Zener-Diode (50) mit einem Steuerschalter (7) für die Zuführung der Hilfslast (2) parallel geschaltet ist, und daß der Eingang (S) des Reglers (5) mit dem Steuerschalter für die Zuführung der Hilfslast (7) über einen Transistor (501) verbunden ist, dessen Emitterelektrode direkt mit der Klemme ($B^+_1$) der Gleichrichter-Halbbrücke verbunden und dessen Kollektorelektrode direkt mit dem Eingang (S) des Reglers verbunden ist, während die Basiselektrode des Transistors (501) mit Hilfe einer Diode (514) und einer Polarisationsschaltung (R100, R90) mit dem Steuerschalter (7) für die Hilfslast verbunden ist, und wobei die Kollektorelektrode des Transistors und der Eingang (S) des Reglers (5) mit dem Ausgang ($B^+_2$) der die Hilfslast (2) speisenden Gleichrichter-Halbbrücke über einen Polarisationswiderstand (R200) verbunden sind, während die Ausgangsspannung des Wechselstromgenerators weiterhin durch den Regler geregelt wird, wenn die Hilfslast zugeführt wird, und wobei das Vorhandensein von Spannung an der Hilfslast erfaßt wird, um die Gegenkopplung des Reglers zu modifizieren.

3. Vorrichtung nach Anspruch 1, **dadurch gekennzeichnet,** daß der genannte Regler folgendes enthält:
   - eine Vergleichsschaltung (50), dessen erster, negativer Eingang einen Eingang (S) zum Regler bildet und mit dem Statorausgang des Wechselstromgenerators (4) über einen Widerstand verbunden ist und dessen zweiter, positiver Eingang mit einer Bezugsspannung (Vref) verbunden ist,
   - Stromerzeugermittel (51), die durch die Vergleichsschaltung gesteuert werden, wobei die genannten Stromerzeugungsmittel einen Erregerausgang (E) enthalten, der direkt mit der Erregerklemme des Wechselstromgenerators verbunden ist.

4. Vorrichtung nach den Ansprüchen 1 und 3, **dadurch gekennzeichnet,** daß der genannte Regler (5) außerdem einen Erreger-Steuereingang (B) enthält, der mit der Relaisumschaltklemme verbunden ist, wodurch in Arbeitsstellung (II) die Verbindung zwischen dem Statorausgang des Wechselstromgenerators (4) und der Hilfslast (2) gewährleistet ist.

5. Vorrichtung nach Anspruch 4, **dadurch gekennzeichnet,** daß der Erreger-Steuereingang (B) mit der Bezugsspannung der Vergleichsschaltung über Schalttransistoren (62) verbunden ist.

6. Vorrichtung nach einem der Ansprüche 1 bis 4, **dadurch gekennzeichnet,** daß die genann-

ten Schaltmittel außerdem einen Temperatur-fühler (100) des Fahrzeug-Kühlkreislaufs enthalten, wobei der genannte Fühler (100) entsprechend der genannten erfaßten Temperatur so angeglichen ist, daß über einen Temperaturwertbereich die Umschaltung der genannten Schaltmittel (6) in der Überspannungsstellung der Hilfslast gewährleistet ist.

7. Vorrichtung nach einem der Ansprüche 1 bis 6, **dadurch gekennzeichnet,** daß die genannten Schaltmittel (6) außerdem Mittel zur Schaltverzögerung (200) beim Öffnen der Steuerung der Schaltmittel enthalten.

8. Vorrichtung nach einem der Ansprüche 1 bis 7, **dadurch gekennzeichnet,** daß die Steuerung der Schaltmittel, die aus einem Schalter (7) besteht, zumindest funktionell mit Mitteln zur Beschleunigung der Motordrehzahl (M) gekoppelt ist, wie z.B. einem handbetätigten Beschleuniger, einem Hebel zur Anreicherung des Luft-Kraftstoff-Gemischs, einem automatischer oder halbautomatischen Anlasser, einem Gaspedal oder einer ähnlichen Vorrichtung.

9. Vorrichtung nach Anspruch 2, **dadurch gekennzeichnet,** daß die Schaltmittel (6) aus Thyristoren (TH1, TH2, TH3) bestehen, die in der positiven Halbbrücke des Wechselstromgenerator-Ausgangs eingebaut sind, wodurch die Akku-Batterie (3) und die Nutzlast (1) gespeist werden.

10. Vorrichtung nach Anspruch 2, **dadurch gekennzeichnet,** daß der genannte Regler folgendes enthält:
    - eine Vergleichsschaltung (50), dessen erster, negativer Eingang einen Eingang (S) zum Regler bildet und mit dem Statorausgang des Wechselstromgenerators (4) über einen Widerstand verbunden ist und dessen zweiter, positiver Eingang mit einer Bezugsspannung (Vref) verbunden ist,
    - Stromerzeugermittel (51), die durch die Vergleichsschaltung gesteuert werden, wobei die genannten Stromerzeugungsmittel einen Erregerausgang (E) enthalten, der direkt mit der Erregerklemme des Wechselstromgenerators verbunden ist.

FIG-1

FIG-2

14

FIG-3

FIG-4a

FIG-4b

FIG-5

EP 0 246 976 B1

FIG.6